# EUROPÄISCHE PATENTSCHRIFT

(11) **EP 2 848 868 B1**
(45) Veröffentlichungstag und Bekanntmachung des Hinweises auf die Patenterteilung: **17.03.2021**
(21) Anmeldenummer: 14177384.6
(22) Anmeldetag: 17.07.2014
(51) Int. Cl.: F24C 15/20, A21B 3/04

(54) **BACKOFEN MIT FEUCHTIGKEITSSENSOR UND LUFTMANAGEMENTSYSTEM**
BAKING OVEN WITH HUMIDITY SENSOR AND AIR MANAGEMENT SYSTEM
FOUR DE CUISSON DOTÉ DE CAPTEUR D'HUMIDITÉ ET DE SYSTÈME DE GESTION DE L'AIR

(30) Priorität: 30.07.2013 DE 102013214848
(43) Veröffentlichungstag der Anmeldung: 18.03.2015
(73) Patentinhaber: BSH Hausgeräte GmbH, 81739 München (DE)
(72) Erfinder: Koch, Bernhard, 83334 Inzell (DE); Schönhuber, Josef, 83365 Nussdorf (DE)

(56) Entgegenhaltungen:
- EP-A1- 0 319 673
- EP-A1- 2 615 375
- WO-A2-2012/112704
- DE-A1- 3 516 847
- DE-A1-102005 035 564
- DE-A1-102008 040 398
- DE-C1- 10 245 773

## Beschreibung

Die Erfindung betrifft einen Backofen, aufweisend einen Garraum, einen Feuchtigkeitssensor und ein Luftmanagementsystem zum Belüften und/oder Entlüften des Garraums, wobei das Luftmanagementsystem auf der Grundlage einer Feuchtigkeitsmessung des Feuchtigkeitssensors steuerbar ist,

DE 10 2010 054 607 B3 offenbart ein Verfahren zum Betreiben eines Gargerätes, mit folgenden Schritten: Ermittlung des Sauerstoffpartialdrucks über eine Lambdasonde, Bestimmung des tatsächlichen Umgebungsdrucks auf Basis des ermittelten Sauerstoffpartialdrucks und Kalibrieren des Gargerätes auf Basis des tatsächlichen Umgebungsdrucks.

DE 38 04 678 C2 offenbart einen Backofen, der wahlweise mit Mikrowellen- und/oder elektrischer Widerstandsheizung, vorzugsweise mit umgewälzter Warmluft, betreibbar ist, mit folgenden Merkmalen: Der Backofen weist ein in einem Wrasenabzugskanal angeordnetes Wrasenabsauggebläse auf. In dem Wrasenabzugskanal sind, in Strömungsrichtung vor dem Wrasenabsauggebläse, ein Feuchtesensor und ein Temperatursensor angeordnet. In einem Garbetrieb ist das Wrasenabsauggebläse kontinuierlich in Betrieb, die Drehzahl des Wrasenabsauggebläses ist in Abhängigkeit von der gewählten Betriebsart und den gemessenen Feuchte- und Temperaturwerten variierbar.

EP 1 837 601 A2 betrifft ein Verfahren zur Steuerung eines Pyrolysereinigungsvorgangs bei einem Backofen, das folgende Verfahrensschritte aufweist: a) Beheizung des Garraums durch das Einschalten einer Heizquelle; b) Messung der Sauerstoffkonzentration in dem Garraum oder in einem Abluftweg zur Abführung von Wrasen aus dem Garraum mittels eines Sauerstoffsensors; c) Vergleich der aktuell gemessenen Sauerstoffkonzentration mit einem vorher festgelegten und in einem Speicher einer elektrischen Steuerung des Backofens abgespeicherten Grenzwert in einer Auswerteschaltung der elektrischen Steuerung; d) Betrieb des Backofens bei ausgeschalteter Heizquelle für ein vorher festgelegtes und in dem Speicher abgespeichertes Zeitintervall, falls die gemessene Sauerstoffkönzentration den Grenzwert unterschreitet; e) Wiederholung der vorgenannten Verfahrensschritte, beginnend mit dem Verfahrensschritt b), nach Ablauf des Zeitintervalls oder f) Wiederholung der vorgenannten Verfahrensschritte, beginnend mit dem Verfahrensschritt a), falls die gemessene Sauerstoffkonzentration größer oder gleich dem Grenzwert ist.

Bei einem bisher bekannten Nachlaufbetrieb nach einem Garbetrieb ist es bekannt, dass eine Aktivierung eines Kühllüfters zur Einblasen von Kühlluft in einen Garraum temperatur- und zeitgesteuert erfolgt. Im Speziellen wird zunächst aus Sicherheitsgründen nach einem Ende eines Garbetriebs ein Heizlüfter bei ausgeschalteter Umluftheizung solange betrieben, bis die Temperatur in dem Garraum unter einen ersten Temperaturgrenzwert gefallen ist. Anschließend an diese Abkühlphase wird der Kühllüfter zeitgesteuert für eine definierte Zeitdauer x betrieben, um eine eventuell noch vorhandene Restfeuchte aus dem Backofen (d.h. aus dem Garraum oder aus einem außerhalb des Garraums befindlichen Elektronikeinbauraum) zu befördern. So können Elektronikausfälle und eine Betauung in dem Backofen vermieden werden. Während dieser Abkühlphase erfolgt keine Prüfung des tatsachlichen Feuchtegehalts in dem Garraum. Vielmehr wird der Kühllüfter immer für die definierte Zeitdauer x betrieben, welche eine maximale Zeitdauer darstellt, die für die meisten oder alle möglichen Feuchtigkeitszustände eine ausreichende Entfeuchtung erreicht.

Bekannt ist, dass die tatsächlich notwendige Nachlaufzeit sehr stark abhängig von der zubereiteten Speise, von der erreichten Garraumtemperatur und einem Feuchtegehalt in dem Garraum am Ende des Garbetriebs ist. Bei bekannten Geräten weist allerdings nur die Garraumtemperatur einen Einfluss auf die Dauer des Nachlaufbetriebs auf.

DE 10 2008 040 398 A1 offenbart eine Gargerätevorrichtung mit einer Regelungseinheit, die zur Regelung einer von einer Temperaturkenngröße abweichenden Kenngröße in einem Garraum vorgesehen ist.

DE 10 2005 035 564 A1 offenbart, dass bei einem Verfahren und einer Vorrichtung zur Steuerung eines Haushaltsbackofens wird mindestens ein Back- oder Garparameter erfasst und ausgewertet wird. Die Luftfeuchtigkeit wird während eines Back- oder Garvorgangs in einer Backmuffel oder innerhalb von Wrasen erfasst, ausgewertet und eingestellt. Zur Einstellung kann beispielsweise die Lüfterleistung verändert werden. Alternativ kann Flüssigkeit zugegeben oder die Luftfeuchtigkeit direkt erhöht werden. W2012/112704 offenbart einen Backofen, der ein Temperatur- und Feuchtigkeitsregelsystem umfasst.

Es ist die **Aufgabe** der vorliegenden Erfindung, die Nachteile des Standes der Technik zumindest teilweise zu überwinden und insbesondere eine backtechnisch und/oder energetisch verbesserte Möglichkeit zum Betrieb des betreffend genannten Backofen mit verlängerter Lebensdauer bereitzustellen.

Diese Aufgabe wird gemäß den Merkmalen des nabhängigen Anspruchs 1 gelöst. Bevorzugte Ausführungsformen sind insbesondere den abhängigen Ansprüchen entnehmbar.

Die Aufgabe wird gelöst durch einen Backofen, aufweisend: einen Garraum, einen Feuchtigkeitssensor und ein Luftmanagementsystem zum Belüften und/oder Entlüften des Garraums, welches Luftmanagementsystem dazu eingerichtet ist, das Belüften und/oder Entlüften auf der Grundlage einer Feuchtigkeitsmessung des Feuchtigkeitssensors zu steuern. Dabei ist der Feuchtigkeitssensor in dem Garraum angeordnet, und das Luftmanagementsystem ist dazu eingerichtet, das Belüften und/oder Entlüften auf der Grundlage der Feuchtigkeitsmessung während eines Garbetriebs und/oder während eines Nachlaufbetriebs des Backofens zu steuern.

Durch die Anordnung des Feuchtigkeitssensors in dem Garraum ergibt sich der Vorteil, dass eine Feuchtigkeitsmessung zu jeder Zeit möglich ist, also auch dann, wenn ein Wrasenabzugskanal geschlossen ist. Mittels einer solchen Feuchtemessung ermöglicht das Luftmanagementsystem dann auch eine gezielte Einstellung oder Regelung eines Feuchtigkeitsgehalts in dem Garraum während der gesamten Dauer eines beliebigen Garbetriebs. Dies hilft, eine Back- oder Garqualität zu verbessern und/oder zu erweitern. Ferner kann auf bestimmte eigenständige Gararten (z.B. das sog. "HydroBacken") verzichtet werden, die speziell dafür geschaffen wurden, um Garbetriebsarten anzubieten, bei denen nicht belüftet oder entlüftet wird. Zudem wird eine Energieeinsparung ermöglicht, da das Luftmanagementsystem bedarfsgerecht betrieben werden kann und eine unnötige Belüftung oder Entlüftung des Garraums vermieden werden kann. Durch die lediglich bedarfsgerechte Aktivierung des Luftmanagementsystems mag eine Lebensdauer seiner Komponenten, insbesondere mindestens eines zugehörigen Lüfters, verlängert werden.

Ein solches Luftmanagementsystem ermöglicht eine gezielte Entlüftung im Nachlaufbetrieb nur so lange wie sie tatsächlich benötigt wird, um einen Feuchtigkeitsgehalt in dem Garraum unter ein gewünschtes Maß zu bringen. Dadurch wiederum ergeben sich eine Energieeinsparung des Backofens und eine verlängerte Lebensdauer des Luftmanagementsystems. Zudem kann eine Lärmbelästigung für den Kunden verringert werden, da das Luftmanagementsystem nicht mehr für seine maximale Zeit laufen braucht.

Der Backofen kann ein reiner Backofen oder ein Kombinationsgerät sein, z.B. mit einer Mikrowellenfunktionalität und/oder einer Dampffunktion. Der Backofen mag ferner z.B. ein sog. Stand-Alone-Gerät oder ein Herd bzw. eine Backofen-Kochfeld-Kombination sein.

Der Garraum mag auch als Backraum, Backofenraum oder Speisenbehandlungsraum bezeichnet werden.

Das Luftmanagementsystem zum Belüften und/oder Entlüften des Garraums mag beispielsweise folgende Komponenten umfassen: einen Wrasenlüfter zum Absaugen von Wrasen aus dem Garraum, einen Kühllüfter zum Drücken von Kühlluft in den Garraum und ggf. zur Kühlung elektrischer oder elektronsicher Backofenkomponenten sowie eine Steuereinrichtung zum wahlweisen Aktivieren und Deaktivieren bzw. Betreiben und Anhalten der Lüfter. Der Wrasenlüfter und der Kühllüfter mögen zwei getrennte Lüfter sein. Alternativ mag er ein einziger, z.B. zweiflutiger, Lüfter sein, welcher sowohl die Funktion eines Wrasenlüfters als auch eines Kühllüfters übernehmen kann. Das Luftmanagementsystem mag ferner eine oder mehrere steuerbare Klappen aufweisen, welche ein oder mehrere Luftkanäle oder Zweige davon wahlweise öffnen oder schließen.

Zumindest einer der Lüfter mag ein Lüfter mit konstanter Nenndrehzahl sein, was eine Verwendung einfacher und preisgünstiger Lüfter erlaubt. Zumindest einer der Lüfter mag aber auch ein drehzahlgesteuerter Lüfter sein, was eine besonders flexible Belüftung und/oder Entlüftung ermöglicht.

Dass das Luftmanagementsystem auf der Grundlage einer Feuchtigkeitsmessung des Feuchtigkeitssensors steuerbar ist, mag insbesondere umfassen, dass ein oder mehrere Messwerte oder daraus abgeleitete Werte als Grundlage für eine Aktivierung und/oder eine Deaktivierung mindestens einer Komponente des Luftmanagementsystems herangezogen wird bzw. werden. Die Messwerte können direkt von dem Feuchtigkeitssensor abgreifbare Feuchtigkeits-Messwerte sein oder mögen Messwerte sein, die sich in Feuchtigkeitswerte umwandeln lassen.

Zur Steuerung des Luftmanagementsystems mag dieses eine Steuereinrichtung oder Auswertelogik aufweisen. Diese Steuereinrichtung mag einer zentralen Steuereinrichtung des Backofens entsprechen oder mit ihr zusammenarbeiten. Der Feuchtigkeitssensor mag datentechnisch direkt mit dem Luftmanagementsystem gekoppelt sein, insbesondere falls dieses eine eigene Steuereinrichtung oder Auswertelogik aufweist. Der Feuchtigkeitssensor mag alternativ datentechnisch mit der zentralen Steuereinrichtung des Backofens gekoppelt sein, welche wiederum das Luftmanagementsystem steuert.

Das Luftmanagementsystem mag dazu eingerichtet sein, das Belüften und/oder Entlüften auch auf der Grundlage einer Bestimmung einer anderen physikalischen Größe während eines Garbetriebs und/oder während eines Nachlaufbetriebs des Backofens zu steuern, z.B. auf der Grundlage einer Temperatur in dem Garraum. Dazu mag das Luftmanagementsystem z.B. mit einem Temperatursensor gekoppelt sein.

Es ist eine Ausgestaltung, dass das Luftmanagementsystem dazu eingerichtet ist, einen Feuchtigkeitsgehalt während eines Garbetriebs durch eine Entlüftung des Garraums einzustellen. Dadurch kann - im Gegensatz zum Fall einer Belüftung durch Frischluft - eine Temperatur in dem Garraum auf einfache Weise aufrechterhalten werden. Diese Ausgestaltung umfasst insbesondere, dass ein Feuchtigkeitsgehalt in dem Garraum nur durch eine Entlüftung des Garraums einstellbar ist, also nicht auch durch eine gezielte Belüftung.

Es ist noch eine Ausgestaltung, dass das Luftmanagementsystem dazu eingerichtet ist, zur Entlüftung des Garraums während des Garbetriebs eine Wrasenklappe und/oder einen Wrasenlüfter zu steuern. Die Wrasenklappe und/oder der Wrasenlüfter mögen einen Teil des Luftmanagementsystems darstellen. Die Entlüftung mag beispielsweise mittels eines Öffnens einer Wrasenklappe eines Wrasenabzugskanals und/oder mittels eines Aktivierens eines Luft und/oder Wrasen aus dem Garraum absaugenden Wrasenlüfters geschehen.

Es ist eine Weiterbildung, dass das Luftmanagementsystem dazu eingerichtet ist, mit Erreichen oder Überschreiten eines ersten vorbestimmten Feuchtigkeitsschwellwerts eine Entlüftung zu aktivieren, z.B. die Wrasenklappe zu öffnen und/oder den Wrasenlüfter zu aktivieren. Es ist noch eine Weiterbildung, dass das Luftmanagementsystem dazu eingerichtet ist, mit Erreichen oder Unterschreiten eines zweiten vorbestimmten Feuchtigkeitsschwellwerts eine Entlüftung zu deaktivieren, z.B. die Wrasenklappe zu schließen und/oder den Wrasenlüfter zu deaktivieren. Der zweite Feuchtigkeitsschwellwert mag gleich dem ersten Feuchtigkeitsschwellwert sein oder zur Vermeidung häufiger Wechsel zwischen Aktivierung und Deaktivierung unter dem ersten Feuchtigkeitsschwellwert liegen.

Es ist eine weitere Ausgestaltung, dass das Luftmanagementsystem dazu eingerichtet ist, während eines Nachlaufbetriebs einen Feuchtigkeitsgehalt in dem Garraum durch eine Belüftung des Garraums einzustellen. Dies weist den Vorteil auf, dass so eine Temperatur in dem Garraum weiter absenkbar ist und zudem eine besonders schnelle Austreibung von Feuchtigkeit aus dem Garraum realisierbar ist.

Es ist eine Ausgestaltung davon, dass das Luftmanagementsystem dazu eingerichtet ist, während des Nachlaufbetriebs einen Kühllüfter zur Belüftung des Garraums zu steuern, insbesondere zu aktivieren. Der Kühllüfter mag einen Teil des Luftmanagementsystems darstellen.

Erfindungsgemäß ist das Luftmanagementsystem dazu eingerichtet, den Kühllüfter mindestens so lange zu betreiben, bis ein Feuchtigkeitsgehalt in dem Garraum einen vorbestimmten Feuchtigkeitsschwellwert erreicht oder unterschreitet. So können unerwünschte Elektronikausfälle und eine Betauung in dem Backofen verhindert werden. Auch wird der Kühllüfter dabei nur so lange betrieben, wie nötig, was seine Lebensdauer verlängert, einen Energieverbrauch senkt und eine Geräuschbelästigung vermindert.

Im Nachlaufbetrieb mag der Garraum zusätzlich zu seiner Belüftung auch aktiv entlüftet werden, z.B. durch eine Aktivierung eines Wrasenlüfters.

Es ist ferner eine Ausgestaltung, dass der Feuchtigkeitssensor eine Lambdasonde aufweist oder ist. Die Lambdasonde weist den Vorteil auf, dass sie die über den ganzen Bereich in einem Garraum eines Backofens typischerweise auftretenden Temperaturen schadlos aushält.

Es ist noch eine Ausgestaltung, dass der Backofen ein Haushalts-Backofen ist und also ein Haushaltsgerät ist, z.B. im Sinne einer "weißen Ware".

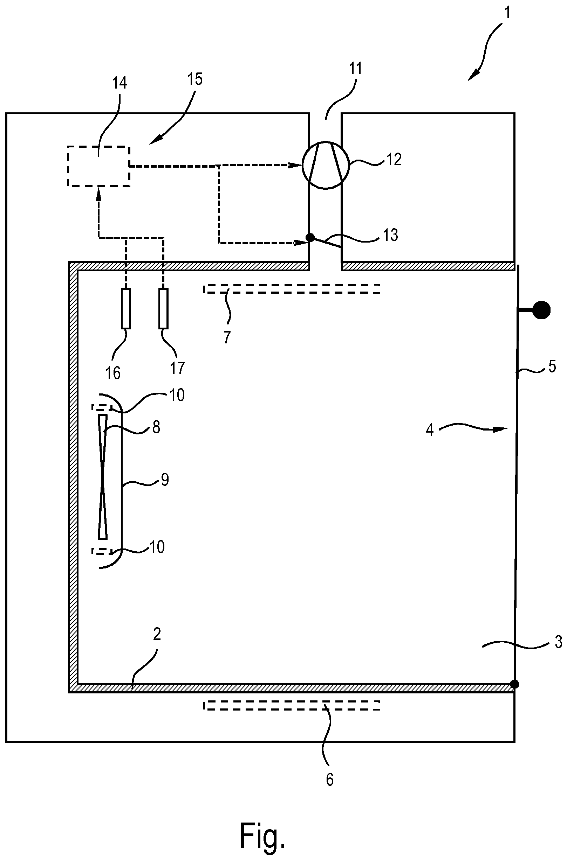

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit der Zeichnung näher erläutert wird. Dabei können zur Übersichtlichkeit gleiche oder gleichwirkende Elemente mit gleichen Bezugszeichen versehen sein.

Die **Fig.** zeigt als Schnittdarstellung in Seitenansicht eine Skizze eines Haushalts-Backofens 1 mit einer Muffel 2, welche einen Garraum 3 umschließt. Die Muffel 2 weist eine frontseitige Beschickungsöffnung 4 auf, welche durch eine Tür 5 verschließbar ist. An der Muffel 2 sind zur Erwärmung des Garraums 3 ein Unterhitzeheizkörper 6 und ein Oberhitze- oder Grillheizkörper 7 angeordnet. Ferner ist an einer Rückwand der Muffel ein Umluftventilator 8 hinter einer Prallwand 9 angeordnet, welcher zusammen mit einem getrennt aktivierbaren Ringheizkörper 10 eine Umluftheizung 9, 10 bildet.

Zur Belüftung und Entlüftung des Garraums 3 ist dieser über einen Luftkanal 11 mit der Umgebung des Haushalts-Backofens 1 verbunden. In dem Luftkanal 11 ist ein zweiflutiger oder bidirektionaler Lüfter 12 angeordnet. Zudem ist der Luftkanal 11 mittels einer Klappe verschließbar, welche ohne Beschränkung der Allgemeinheit als "Wrasenklappe" 13 bezeichnet wird. Der Lüfter 12 und die Wrasenklappe 13 sind mittels einer zentralen Steuereinrichtung 14 betätigbar, also wahlweise aktivierbar und deaktivierbar bzw. öffenbar und verschließbar. Der Lüfter 12, die Wrasenklappe 13 und die zentrale Steuereinrichtung 14 bilden hierbei ein Luftmanagementsystem 12 bis 14, welches eine Belüftung und eine Entlüftung des Garraums 3 steuert. Der Lüfter 12 und die Wrasenklappe 13 können dabei auch als "lüftungsaktive" Elemente angesehen werden, welche eine Belüftung oder Entlüftung des Garraums 3 pneumatisch oder lufttechnisch beeinflussen Die zentrale Steuereinrichtung 14 mag eine Luftmanagementfunktion aufweisen, aber insbesondere auch für andere Steueraufgaben des Haushalts-Backofens 1 vorgesehen sein, z.B. für eine Aktivierung und Deaktivierung des Unterhitzeheizkörper 6, des Oberhitze- oder Grillheizkörpers 7, des Umluftventilators 8 und/oder des Ringheizkörpers 10.

In einer Variante ist die Wrasenklappe 13 im aktivierten (z.B. bestromten) Zustand geschlossen und im nicht aktivierten (z.B. unbestromten) Zustand geöffnet, und der Lüfter 12 ist im deaktivierten Zustand gasdurchlässig, z.B. für trockene oder feuchte Luft und für Wrasen. Dadurch ist bei ausgeschaltetem Haushalts-Backofen 1 eine Verbindung von dem Garraum 3 zu der Umgebung vorhanden, welche eine Betauung des Garraums 3 und eines oberhalb des Garraums 3 vorhandenen Elektronikeinbauraums 15 vermeidet.

Beispielsweise mag die zentrale Steuereinrichtung 14 in einem Elektronikeinbauraum 15 vorhanden sein.

Jedoch ist dies nur eine von vielen Möglichkeiten zur Belüftung und Entlüftung des Garraums 3. So mögen ein eigener Luftkanal und/oder ein eigener (einflutiger oder unidirektionaler) Lüfter zur Belüftung und Entlüftung vorhanden sein. Auch ist es, z.B. durch geeignete Kanalführung, möglich, dass ein unidirektionaler oder einflutiger Lüfter sowohl einer Belüftung als auch einer Entlüftung dient.

In dem Garraum 3 sind ferner ein Temperatursensor 16 und ein Feuchtigkeitssensor in Form einer Lambdasonde 17 angebracht, welche mit der zentralen Steuereinrichtung 14 verbunden sind. Die zentrale Steuereinrichtung 14 dient dabei als Auswerteeinheit für Messwerte der Sonden 16, 17. So mag die zentrale Steuereinrichtung 14 temperaturabhängige elektrische Signale des Temperatursensors 16 in entsprechende Temperaturwerte umsetzen.

Die zentrale Steuereinrichtung 14 dient ferner dazu, elektrische Signale der Lambdasonde 17 in entsprechende Feuchtigkeitswerte umrechnen. Dabei wird ausgenutzt, dass eine Lambdasonde 17 zwar primär ein Sauerstoffsensor ist, jedoch der Sauerstoffgehalt und der Feuchtigkeitsgehalt in dem Garraum 3 korrelieren, da bei einem Garvorgang entstehender Dampf Sauerstoff aus dem Garraum 3 verdrängt. Ein sinkender Sauerstoffgehalt entspricht auf eine quantifizierbare Weise einem steigenden Feuchtigkeitsgehalt. Die zentrale Steuereinrichtung 14 kann, beispielsweise mittels geeigneter - ggf. temperaturabhängiger - Kennlinien, aus den primären Sauerstoffmesswerten Feuchtigkeitsmesswerte ableiten. Das Luftmanagementsystem 12 bis 14 bzw. deren lüftungsaktive Elemente 12, 13 sind zumindest auf der Grundlage der (indirekt bestimmten) Feuchtigkeitsmesswerte der Lambdasonde 17 steuerbar bzw. arbeiten mit diesen Feuchtigkeitsmesswerten. Jedoch können die Werte der elektrischen Signale der Sonden 16, 17 auch direkt - also ohne eine Umrechnung o.ä. - zur Steuerung des Lüfters 12 und der Wrasenklappe 13 herangezogen werden.

Das Luftmanagementsystem 12 bis 14 ist grundsätzlich auch in der Lage, eine Belüftung und Entlüftung des Garraums 3 auf der Grundlage anderer Eingangswerte, insbesondere der Temperaturmesswerte des Temperatursensors 16, zu steuern.

Insbesondere ist das Luftmanagementsystem 12 bis 14 dazu eingerichtet bzw. dazu in der Lage, die Belüftung und die Entlüftung des Garraums 3 auf der Grundlage (mindestens) einer Feuchtigkeitsmessung bzw. auf der Grundlage entsprechender Feuchtigkeits-messwerte während eines Garbetriebs und/oder während eines Nachlaufbetriebs zu steuern.

Dies mag für einen Garbetrieb, in welchem ein in dem Garraum 3 befindliches Gargut wärmebehandelt wird, in einer Variante beispielsweise folgendermaßen geschehen: Mit Aufheizen des Garraums 3 verdunstet Wasser aus dem Gargut, so dass ein Feuchtigkeitsgehalt in dem Garraum 3 ansteigt. Der Feuchtigkeitsgehalt ist über die Lambdasonde 17 (indirekt) erfassbar. Das Luftmanagementsystem 12 bis 14 ist so eingerichtet, dass es die Wrasenklappe 13 geschlossen und den Lüfter 12 deaktiviert hält, wenn der Feuchtigkeitsgehalt unterhalb eines ersten Feuchtigkeitsschwellwerts liegt. So kann ein Energieverlust durch aus dem Garraum 3 ausströmende warme Luft gering gehalten werden. Wird hingegen der erste Feuchtigkeitsschwellwert erreicht oder überschritten, veranlasst die zentrale Steuereinrichtung 14 ein Öffnen der Wrasenklappe 13 und ein Aktivieren oder Anschalten des Lüfters 12. Dabei wird der Lüfter 12 so angesteuert, dass er zur Entlüftung feuchte Luft und/oder Wrasen aus dem Garraum absaugt. Der Lüfter 12 dient somit als Wrasenlüfter oder Wrasenabzugslüfter. Die feuchte Luft wird so lange abgesaugt, dass der Feuchtigkeitsgehalt absinkt, bis ein zweiter Feuchtigkeitsschwellwert erreicht oder unterschritten wird. Dann werden die Wrasenklappe 13 wieder geschlossen und der Lüfter 12 deaktiviert oder ausgeschaltet. Um ein häufiges Umschalten von Wrasenklappe 13 und Lüfter 12 zu vermeiden, liegt der zweite Feuchtigkeitsschwellwert unterhalb des ersten Feuchtigkeitsschwellwerts. Das Luftmanagementsystem 12 bis 14 mag beispielsweise auf diese Art den Feuchtigkeitsgehalt in dem Garraum 3 zuverlässig einstellen oder regeln, und zwar auch dann, wenn die Wrasenklappe 13 geschlossen ist und dadurch der Feuchtigkeitsgehalt in dem Luftkanal 11 nicht mehr mit demjenigen in dem Garraum 3 korreliert. Der mindestens eine (erste und/oder zweite) Feuchtigkeitsschwellwert mag z.B. in Abhängigkeit von einer Temperatur, einer gewählten Garbetriebsart, einer ausgewählten Speise und/oder einem ausgewählten Garprogramm unterschiedlich sein.

An einen Garbetrieb schließt sich üblicherweise ein Nachlaufbetrieb an, welcher erfindungsgemäß folgendermaßen durchführbar ist: Zunächst mag in einem ersten Teilabschnitt des Nachlaufbetriebs eine Temperatur in dem Garraum 3 durch Betätigen des Umluftventilators 8 ohne Aktivierung des Ringheizkörpers 10 verringert werden. Dabei mag die Wrasenklappe 13 geöffnet sein. Erreicht oder unterschreitet die sinkende Temperatur einen vorbestimmten Temperaturschwellwert, wird mittels der zentralen Steuereinrichtung 14 geprüft, ob der Feuchtigkeitsgehalt in dem Garraum 3 an oder oberhalb eines vorbestimmten, niedrigen Feuchtigkeitsschwellwerts liegt. Ist dies der Fall, wird der Lüfter 12 eingeschaltet und drückt nun zur Belüftung kalte Frischluft aus der Umgebung in den Garraum 3. Der Lüfter 12 dient dann als ein Kühllüfter und wird nur so lange betrieben, bis der Feuchtigkeitsgehalt in dem Garraum 3 den vorbestimmten, niedrigen Feuchtigkeitsschwellwert erreicht oder unterschreitet.

Der Garbetrieb und der Nachlaufbetrieb werden als unterschiedliche Betriebsarten des Haushalts-Backofens 1 angesehen.

### Bezugszeichenliste

- 1: Backofen
- 2: Muffel
- 3: Garraum
- 4: Beschickungsöffnung
- 5: Tür
- 6: Unterhitzeheizkörper
- 7: Oberhitze- oder Grillheizkörper
- 8: Umluftventilator
- 9: Umluftheizung
- 10: Ringheizkörper
- 11: Luftkanal
- 12: Lüfter
- 13: Wrasenklappe
- 14: zentrale Steuereinrichtung
- 15: Elektronikeinbauraum
- 16: Temperatursensor
- 17: Lambdasonde

## Patentansprüche

1. Backofen (1), aufweisend:
- einen Garraum (3),
- einen Feuchtigkeitssensor (17) welcher in dem Garraum angeordnet ist,
- eine Umluftheizung (9, 10) mit einem Umluftventilator (8) und einem Ringheizkörper (10) und
- ein Luftmanagementsystem (12-14) zum Belüften und/oder Entlüften des Garraums (3),
- welches Luftmanagementsystem (12-14) dazu eingerichtet ist, das Belüften und/oder Entlüften auf der Grundlage einer Feuchtigkeitsmessung des Feuchtigkeitssensors (17) zu steuern, und
- das Luftmanagementsystem (12-14) dazu eingerichtet ist, das Belüften und/oder Entlüften auf der Grundlage der Feuchtigkeitsmessung während eines Nachlaufbetriebs des Backofens (1) zu steuern **dadurch gekennzeichnet, dass** das Luftmanagementsystem (12-14) dazu eingerichtet ist,
- während eines ersten Teilabschnitts des Nachlaufbetriebs eine Temperatur in dem Garraum (3) durch Betätigen des Umluftventilators (8) ohne Aktivierung des Ringheizkörper (10) zu verringern, bis ein vorbestimmter Temperaturschwellwert erreicht oder unterschritten wird,
- mit Erreichen oder Unterschreiten des vorbestimmten Temperaturschwellwert zu prüfen, ob der Feuchtigkeitsgehalt in dem Garraum (3) an oder oberhalb eines vorbestimmten Feuchtigkeitsschwellwerts liegt und, falls dies der Fall ist,
- während eines sich an den ersten Teilabschnitt anschließenden zweiten Teilabschnitts einen Kühllüfter (12) einzuschalten, um Frischluft in den Garraum (3) zu drücken, bis der Feuchtigkeitsgehalt in dem Garraum (3) den vorbestimmten Feuchtigkeitsschwellwert erreicht oder unterschreitet.

2. Backofen (1) nach Anspruch 1, wobei das Luftmanagementsystem (12-14) dazu eingerichtet ist, einen Feuchtigkeitsgehalt während eines Garbetriebs durch eine Entlüftung des Garraums (3) einzustellen.

3. Backofen (1) nach Anspruch 2, wobei das Luftmanagementsystem (12-14) dazu eingerichtet ist, während des Garbetriebs eine Wrasenklappe (13) und/oder einen Wrasenlüfter (12) zu steuern.

4. Backofen (1) nach einem der vorhergehenden Ansprüche, wobei das Luftmanagementsystem (12-14) dazu eingerichtet ist, während eines Nachlaufbetriebs einen Feuchtigkeitsgehalt in dem Garraum (3) durch eine Belüftung des Garraums (3) einzustellen.

5. Backofen (1) nach Anspruch 4, wobei das Luftmanagementsystem dazu eingerichtet ist, während des Nachlaufbetriebs den Kühllüfter (12) zu steuern.

6. Backofen (1) nach einem der vorhergehenden Ansprüche, wobei das Luftmanagementsystem (12-14) einen zweiflutigen Lüfter (12) zum Belüften und zum Entlüften des Garraums (3) aufweist.

7. Backofen (1) nach einem der vorhergehenden Ansprüche, wobei der Feuchtigkeitssensor (17) eine Lambdasonde aufweist.

8. Backofen (1) nach einem der vorhergehenden Ansprüche, wobei der Backofen (1) ein Haushalts-Backofen ist.

## Claims

1. Oven (1), having:
- a cooking compartment (3),
- a humidity sensor (17) that is arranged in the cooking compartment,
- an air circulation heater (9, 10) with an air circulation fan (8) and a ring heating element (10) and
- an air management system (12-14) for ventilating and/or venting the cooking compartment (3),
- which air management system (12-14) is configured to control the ventilating and/or venting on the basis of a humidity measurement by the humidity sensor (17), and
- the air management system (12-14) is configured to control the ventilating and/or venting on the basis of the humidity measurement during a run-on operation of the oven (1),
**characterised in that** the air management system (12-14) is configured,
- during a first subsection of the run-on operation, to reduce a temperature in the cooking compartment (3) by actuating the air circulation fan (8) without activating the ring heating element (10), until a predetermined temperature threshold value is reached or fallen below,
- when the predetermined temperature threshold value is reached or fallen below, to check whether the humidity content in the cooking compartment (3) is at or above a predetermined humidity threshold value and, if this is the case,
- during a second subsection following on from the first subsection, to switch on a cooling fan (12) in order to push fresh air into the cooking compartment (3) until the humidity in the cooking compartment (3) reaches or falls below the predetermined humidity threshold value.

2. Oven (1) according to claim 1, wherein the air management system (12-14) is configured to adjust a humidity during a cooking operation by venting the cooking compartment (3).

3. Oven (1) according to claim 2, wherein the air management system (12-14) is configured to control a vapour valve (13) and/or a vapour fan (12) during the cooking operation.

4. Oven (1) according to one of the preceding claims, wherein the air management system (12-14) is configured to adjust a humidity in the cooking compartment (3) during a run-on operation by ventilating the cooking compartment (3).

5. Oven (1) according to claim 4, wherein the air management system is configured to control the cooling fan (12) during the run-on operation.

6. Oven (1) according to one of the preceding claims, wherein the air management system (12-14) has a dual-flow fan (12) for ventilating and for venting the cooking compartment (3).

7. Oven (1) according to one of the preceding claims, wherein the humidity sensor (17) has a lambda probe.

8. Oven (1) according to one of the preceding claims, wherein the oven (1) is a household oven.

## Revendications

1. Four de cuisson (1), présentant :
- un compartiment de cuisson (3),
- un capteur d'humidité (17) qui est disposé dans le compartiment de cuisson,
- un chauffage de l'air ambiant (9, 10) avec un ventilateur de l'air ambiant (8) et un corps chauffant annulaire (10) et
- un système de gestion de l'air (12-14) permettant d'aérer et/ou d'évacuer l'air du compartiment de cuisson (3),
- lequel système de gestion de l'air (12-14) est conçu pour commander la ventilation et/ou l'évacuation de l'air sur la base d'une mesure d'humidité du capteur d'humidité (17), et
- le système de gestion de l'air (12-14) est conçu pour commander la ventilation et/ou l'évacuation de l'air sur la base de la mesure d'humidité pendant une marche à vide du four de cuisson (1)
**caractérisé en ce que** le système de gestion de l'air (12-14) est conçu pour
- diminuer pendant une première partie de la marche à vide une température dans le compartiment de cuisson (3) par le biais d'un actionnement du ventilateur d'air ambiant (8) sans activation du corps chauffant annulaire (10) jusqu'à ce qu'une valeur de seuil de température prédéterminée soit atteinte ou non atteinte,
- en atteignant ou en n'atteignant pas la valeur de seuil de température prédéterminée vérifier si la teneur en humidité dans le compartiment de cuisson (3) se trouve au niveau ou au-dessus d'un seuil d'humidité prédéterminé et, si c'est le cas,
- pendant une seconde partie ultérieure à la première partie mettre en marche un ventilateur (12), pour pousser de l'air frais dans le compartiment de cuisson (3) jusqu'à ce que la teneur en humidité dans le compartiment de cuisson (3) atteigne le seuil d'humidité prédéterminé ou ne l'atteigne pas.

2. Four de cuisson (1) selon la revendication 1, dans lequel le système de gestion de l'air (12-14) est conçu pour régler une teneur en humidité d'une opération de cuisson par le biais d'une ventilation du compartiment de cuisson (3).

3. Four de cuisson (1) selon la revendication 2, dans lequel le système de gestion de l'air (12-14) est conçu pour commander un clapet à vapeur (13) et/ou un ventilateur de vapeur (12) pendant l'opération de cuisson.

4. Four de cuisson (1) selon l'une des revendications précédentes, dans lequel le système de gestion de l'air (12-14) est conçu pour régler pendant une marche à vide une teneur en humidité dans le compartiment de cuisson (3) par le biais d'une ventilation du compartiment de cuisson (3).

5. Four de cuisson (1) selon la revendication 4, dans lequel le système de gestion de l'air est conçu pour commander le ventilateur de refroidissement (12) pendant la marche à vide.

6. Four de cuisson (1) selon l'une des revendications précédentes, dans lequel le système de gestion de l'air (12-14) présente un ventilateur à double flux (12) permettant de ventiler et d'évacuer l'air du compartiment de cuisson (3).

7. Four de cuisson (1) selon l'une des revendications précédentes, dans lequel le capteur d'humidité (17) présente une sonde lambda.

8. Four de cuisson (1) selon l'une des revendications précédentes, dans lequel le four de cuisson (1) est un four de cuisson électroménager.
